# EUROPÄISCHE PATENTSCHRIFT

(11) **EP 2 404 098 B1**
(45) Veröffentlichungstag und Bekanntmachung des Hinweises auf die Patenterteilung: **25.11.2015**
(21) Anmeldenummer: 09801175.2
(22) Anmeldetag: 24.12.2009
(51) Int. Cl.: F16N 11/10

(54) **VERFAHREN ZUR DOSIERTEN ABGABE VON SCHMIERSTOFF**
METHOD FOR METERED DISPENSING OF LUBRICANT
PROCEDE DE DEBIT DOSE DE LUBRIFIANT

(30) Priorität: 05.03.2009 DE 102009011373; 16.05.2009 DE 102009021628
(43) Veröffentlichungstag der Anmeldung: 11.01.2012
(73) Patentinhaber: Perma-Tec GmbH & Co. KG, 97717 Euerdorf (DE)
(72) Erfinder: EISENBACHER, Egon, 97753 Karlstadt (DE); MORPER, Rainer, 97729 Ramsthal (DE); LEHNERT, Jochen, 97618 Niederlauer (DE)
(74) Vertreter: Albrecht, Rainer Harald
(86) Internationale Anmeldenummer: PCT/EP2009/009279
(87) Internationale Veröffentlichungsnummer: WO 2010/099813

(56) Entgegenhaltungen:
- EP-B1- 0 806 603
- DE-A1-102007 033 539
- US-A- 5 968 325

## Beschreibung

Die Erfindung betrifft ein Verfahren zur dosierten Abgabe von Schmierstoff unter Verwendung eines Schmierstoffspenders, der einen mit Schmierstoff gefüllten Vorratsraum, eine Gaserzeugereinheit zur elektrochemischen Gaserzeugung, einen von dem erzeugten Gas beaufschlagten Kolben zum Ausbringen des Schmierstoffes aus dem Vorratsraum sowie eine elektronische Steuereinheit zur Steuerung der elektrochemischen Gaserzeugung aufweist.

Aus EP 0 806 603 B1 ist ein Schmierstoffspender mit den beschriebenen Merkmalen bekannt. Für die Spendezeit, das heißt die Zeit zur Entleerung des Vorratsraumes, wird ein Vorgabewert eingestellt. Daraus errechnet ein Mikrocontroller der elektronischen Steuereinheit die notwendige Gaserzeugerrate und steuert die Gaserzeugereinheit so, dass die eingestellte Spendezeit bei einer Standard-Temperatur (üblicherweise Raumtemperatur, das heißt ca. 20 °C) erreicht oder zumindest nicht unterschritten wird. Ein Temperatureinfluss auf die Gaserzeugerrate und die pro Zeiteinheit abgegebene Schmierstoffmenge wird nicht berücksichtigt. Bei einem Einsatz des Schmierstoffspenders in Außenanlagen kann abhängig von den klimatischen Einflüssen, jahreszeitig schwankenden Temperaturen und Temperaturänderungen aufgrund von Witterungseinflüssen die tatsächlich erreichte Spendezeit von dem Vorgabewert sehr deutlich abweichen.

In US 5 968 325 wird ein Schmierstoffspender mit einer Gaserzeugereinheit beschrieben, die in einem geschlossenen Stromkreis spontan ohne Fremdenergie Gas erzeugt. Die Gaserzeugerrate, das heißt die erzeugte Gasmenge pro Zeiteinheit, ist abhängig von der Stromstärke und kann durch einen elektrischen Widerstand beeinflusst werden. Die Druckschrift enthält den Hinweis, dass eine von Temperatureinflüssen weniger stark abhängige Gasentwicklung realisiert werden kann, wenn der elektrische Widerstand der Gasentwicklungszelle temperaturabhängig verändert wird und zu diesem Zweck PTC-Widerstände verwendet werden, deren Widerstand sich mit steigender Temperatur erhöht. Die durch Verwendung eines PTC-Widerstandes mögliche Temperaturkompensation ist jedoch noch verbesserungsbedürftig.

In DE102007033539 werden Schmierstoffgeber mit einer gemeinsamen externen Steuerung über Anschlussleitungen oder eine drahtlose Datenkommunikationsverbindung verbunden, wobei die Schmierstoffabgabe während des Betriebs der Schmierstoffgeber durch die externe Steuereinrichtung anhand von vorgegebenen Parametern und/oder abhängig von Betriebszustandsdaten der zu schmierenden Vorrichtung fortlaufend eingestellt wird.

Der Erfindung liegt daher die Aufgabe zugrunde, ein Verfahren zur dosierten Abgabe von Schmierstoff unter Verwendung eines Schmierstoffspender mit den eingangs beschriebenen Merkmalen anzugeben, welches einen von Temperatureinflüssen weitgehend unabhängigen Schmierstoffaustrag ermöglicht. Klimatische Einflüsse sowie jahreszeitig und witterungsbedingte Temperaturschwankungen sollen sich auf den Schmierstoffaustrag und die tatsächlich erreichte Spendezeit nicht auswirken.

Gegenstand der Erfindung und Lösung dieser Aufgabe ist ein Verfahren nach Anspruch 1. Gemäß dem erfindungsgemäßen Verfahren wird für die Spendezeit bis zur Entleerung des Vorratsraumes ein Vorgabewert festgelegt und daraus eine die Gasentwicklungsrate beschreibende Größe errechnet. Die Temperatur des Schmierstoffes oder die Umgehungstemperatur wird in Zeitintervallen gemessen und aus mehreren Temperaturmesswerten wird jeweils ein Temperaturmittelwert gebildet. Für den Temperaturmittelwert wird unter Berücksichtigung gespeicherter Korrekturwerte, welche die Temperaturabhängigkeit der elektrochemischen Gaserzeugerrate beschreiben, eine die elektrochemische Gaserzeugung bestimmende Steuergröße mit der Maßgabe festgelegt, dass die Gaserzeugerrate bei dem Temperaturmittelwert dem aus der vorgegebenen Spendezeit errechneten Sollwert entspricht.

Bei der Festlegung der temperaturabhängigen Korrekturwerte kann gegebenenfalls auch der Temperatureinfluss auf die Viskosität des Schmierstoffes berücksichtigt werden. Mit abnehmender Temperatur steigt die Viskosität des Schmierstoffes teilweise stark an. Um bei zunehmender Viskosität einen gleichmäßigen Schmierstoffaustrag gewährleisten zu können, ist ein höherer Druck auf der Rückseite des Kolbens notwendig. Im Rahmen des erfindungsgemäßen Verfahrens ist es auch möglich, die Korrekturwerte so festzulegen, dass für niedrige Temperaturen eine höhere Gaserzeugerrate zur Erzeugung eines höheren Druckes und entsprechend für hohe Temperaturen eine niedrigere Gaserzeugerrate zur Reduzierung des Druckes resultiert.

Im Rahmen des erfindungsgemäßen Verfahrens kann insbesondere eine Gaserzeugereinheit verwendet werden, die in einem geschlossenen Stromkreis spontan ohne Fremdenergie Gas erzeugt. Die Gaserzeugereinheit kann beispielsweise als Gaserzeugerelement mindestens eine Wasserstofferzeugende Zink-Luft-Zelle enthalten.

Gemäß einer bevorzugten Ausgestaltung des erfindungsgemäßen Verfahrens wird über einen vorbestimmten, beispielsweise einen Zeitraum von 24 Stunden, mehrmals die Temperatur gemessen und wird aus den Temperaturmesswerten für diesen Zeitraum ein Temperaturmittelwert bestimmt.

Die elektrochemische Gaserzeugung wird gemäß einer bevorzugten Ausführung des erfindungsgemäßen Verfahrens dadurch gesteuert, dass ein der Gaserzeugereinheit zugeordneter Stromkreis wechselweise geöffnet und geschlossen wird, wobei das Verhältnis aus Impulsdauer und Pausendauer verändert wird, um die Gaserzeugerrate zu korrigieren. Je länger die Impulsdauer bei geschlossenem Stromkreis gegenüber der Pausendauer bei geöffnetem Stromkreis ist, umso höher ist die mittlere Gaserzeugerrate. Die technische Umsetzung kann durch eine Pulsweitenmodulation erfolgen, wobei der Tastgrad, das heißt das Verhältnis aus variabler Impulsdauer und festgelegter Periodendauer, als Steuergröße verwendet wird. Gemäß einer bevorzugten Ausgestaltung werden jedoch bei einer konstanten Impulsdauer die Pausendauer und damit auch die Periodendauer für das wiederkehrende Öffnen und Schließen des Stromkreises verändert.

Des Weiteren besteht die Möglichkeit, die Stromstärke in einem der Gaserzeugereinheit zugeordneten Stromkreis zu verändern, um die Gaserzeugerrate zu korrigieren. Es versteht sich, dass die beschriebenen Maßnahmen auch miteinander kombiniert werden können.

## Patentansprüche

1. Verfahren zur dosierten Abgabe von Schmierstoffen unter Verwendung eines Schmierstoffspenders, der einen mit Schmierstoff gefüllten Vorratsraum, eine Gaserzeugereinheit zur elektrochemischen Gaserzeugung, einen von dem erzeugten Gas beaufschlagten Kolben zum Ausbringen des Schmierstoffes aus dem Vorratsraum sowie eine elektronische Steuereinheit zur Steuerung der elektrochemischen Gaserzeugung aufweist, **dadurch gekennzeichnet, dass** für die Spendezeit bis zur Entleerung des Vorratsraumes ein Vorgabewert festgelegt und daraus eine die Gaserzeugerrate beschreibende Größe errechnet wird,
wobei die Temperatur des Schmierstoffes oder der Umgebung in Zeitintervallen gemessen und aus mehreren Temperaturmesswerten jeweils ein Temperaturmittelwert gebildet wird,
wobei für den Temperaturmittelwert unter Berücksichtigung gespeicherter Korrekturwerte, welche die Temperaturabhängigkeit der elektrochemischen Gaserzeugerrate beschreiben, eine die elektrochemische Gaserzeugung bestimmende Steuergröße mit der Maßgabe festgelegt wird, dass die Gaserzeugerrate bei dem Temperaturmittelwert dem aus der vorgegebenen Spendezeit errechneten Sollwert entspricht.

2. Verfahren nach Anspruch 1, **dadurch gekennzeichnet, dass** eine Gaserzeugereinheit verwendet wird, die in einem geschlossenen Stromkreis spontan ohne Fremdenergie Gas erzeugt.

3. Verfahren nach Anspruch 2, **dadurch gekennzeichnet, dass** eine Gaserzeugereinheit verwendet wird, die als gaserzeugendes Element mindestens eine wasserstofferzeugende Zink-Luft-Zelle enthält.

4. Verfahren nach einem der Ansprüche 1 bis 3, **dadurch gekennzeichnet, dass** über einen vorbestimmten Zeitraum mehrmals die Temperatur gemessen und aus den Temperaturmesswerten für diesen Zeitraum ein Temperaturmittelwert bestimmt wird.

5. Verfahren nach einem der Ansprüche 1 bis 4, **dadurch gekennzeichnet, dass** ein der Gaserzeugereinheit zugeordneter Stromkreis wechselweise geöffnet und geschlossen wird und dass das Verhältnis aus Impulsdauer und Pausendauer verändert wird, um die Gaserzeugerrate zu korrigieren.

6. Verfahren nach einem der Ansprüche 1 bis 5, **dadurch gekennzeichnet, dass** die Stromstärke in einem der Gaserzeugereinheit zugeordneten Stromkreis verändert wird, um die Gaserzeugerrate zu korrigieren.

7. Verfahren nach einem der Ansprüche 1 bis 6, **dadurch gekennzeichnet, dass** bei der Festlegung der temperaturabhängigen Korrekturwerte auch der Temperatureinfluss auf die Viskosität des Schmierstoffes berücksichtigt wird, so dass für niedrige Temperaturen eine höhere Gaserzeugerrate zur Erzeugung eines höheren Druckes und für hohe Temperaturen eine niedrigere Gaserzeugerrate zur Reduzierung des Druckes als Sollwert resultieren.

## Claims

1. A method for the dosed release of lubricants using a lubricant dispenser, which has a storage space filled with lubricant, a gas generator unit for electrochemical gas generation, a piston loaded by the generated gas for discharging the lubricant from the storage space and also an electronic control unit for controlling the electrochemical gas generation,
**characterized in that**
a default value is defined for the dispensing time until the emptying of the storage space and a value describing the gas-generator rate is calculated therefrom,
wherein the temperature of the lubricant or the environment is measured at time intervals and an average temperature value is formed from a plurality of measured temperature values in each case,
wherein for the average temperature value, taking account of saved correction values which describe the temperature dependence of the electrochemical gas-generator rate, a control variable determining the electrochemical gas generation is defined providing that the gas-generator rate at the average temperature value corresponds to the desired value calculated from the predefined dispensing time.

2. The method according to Claim 1, **characterised in that** a gas generator unit is used, which generates gas in a closed electrical circuit spontaneously without external energy.

3. The method according to Claim 2, **characterised in that** a gas generator unit is used, which contains at least one hydrogen-generating zinc-air cell as gas generating element.

4. The method according to one of Claims 1 to 3, **characterised in that** the temperature is measured multiple times over a predefined time period and an average temperature value is determined from the measured temperature values for this time period.

5. The method according to one of Claims 1 to 4, **characterised in that** an electrical circuit assigned to the gas generator unit is alternately opened and closed and **in that** the ratio of pulse duration and pause duration is changed in order to correct the gas-generator rate.

6. The method according to one of Claims 1 to 5, **characterised in that** the current intensity is changed in an electrical circuit assigned to the gas generator unit, in order to correct the gas-generator rate.

7. The method according to one of Claims 1 to 6, **characterised in that** when determining the temperature-dependent correction values, the temperature influence on the viscosity of the lubricant is also taken into account, so that for low temperatures, a higher gas-generator rate results as desired value for generating a higher pressure and for high temperatures, a lower gas-generator rate results as desired value for reducing the pressure.

## Revendications

1. Procédé destiné à une distribution dosée de lubrifiants en utilisant un distributeur de lubrifiant qui comporte un compartiment de réserve rempli de lubrifiant, une unité de production de gaz pour la production électrochimique de gaz, un piston sollicité par le gaz produit pour extraire le lubrifiant du compartiment de réserve ainsi qu'une unité de commande électronique pour piloter la production électrochimique de gaz,
**caractérisé en ce qu'**
une valeur de consigne est fixée pour le temps de distribution jusqu'au vidage du compartiment de réserve et qu'à partir de cela une valeur décrivant les taux de production de gaz est calculée,
pour lequel la température du lubrifiant ou de l'environnement est mesurée à des intervalles de temps et une valeur moyenne de température est respectivement constituée à partir de plusieurs valeurs de mesure de température,
pour lequel pour la valeur moyenne de température, une valeur de référence déterminant la production électrochimique de gaz est fixée en tenant compte des valeurs de correction mémorisées qui décrivent les taux de production de gaz électrochimique en fonction de la température, conformément au fait que le taux de production de gaz à la valeur moyenne de température correspond à la valeur théorique calculée à partir du temps de distribution préalablement défini.

2. Procédé selon la revendication 1, **caractérisé en ce qu'**une unité de production de gaz est utilisée qui produit spontanément sans énergie étrangère du gaz dans un circuit fermé.

3. Procédé selon la revendication 2, **caractérisé en ce qu'**une unité de production de gaz est utilisée qui contient au moins une cellule Zinc-Air produisant de l'hydrogène en tant qu'élément produisant du gaz.

4. Procédé selon l'une quelconque des revendications 1 à 3, **caractérisé en ce que** la température est mesurée plusieurs fois sur une période de temps préalablement définie et une valeur moyenne de température est déterminée pour cette période de temps à partir des valeurs de mesure de température.

5. Procédé selon l'une quelconque des revendications 1 à 4, **caractérisé en ce qu'**un circuit attribué à l'unité de production de gaz est alternativement ouvert et fermé et **en ce que** le rapport est modifié à partir de la durée d'impulsion et la durée de pause pour corriger le taux de production de gaz.

6. Procédé selon l'une quelconque des revendications 1 à 5, **caractérisé en ce que** l'intensité de courant est modifiée dans un circuit attribué à une unité de production de gaz pour corriger le taux de production de gaz.

7. Procédé selon l'une quelconque des revendications 1 à 6, **caractérisé en ce que** l'effet de la température sur la viscosité du lubrifiant est également pris en compte lors de la fixation des valeurs de correction en fonction de la température de sorte que l'on obtient en résultat en tant que valeur théorique, un taux de production de gaz plus élevé pour la production d'une pression plus élevée pour des températures basses et un taux de production de gaz plus faible pour réduire la pression pour des températures élevées.
